(19) Europäisches Patentamt / European Patent Office / Office européen des brevets

(11) **EP 2 702 478 B1**

(12) **FASCICULE DE BREVET EUROPEEN**

(45) Date de publication et mention de la délivrance du brevet:
**11.02.2015 Bulletin 2015/07**

(21) Numéro de dépôt: **12722439.2**

(22) Date de dépôt: **19.04.2012**

(51) Int Cl.:
**G06F 7/483** $^{(2006.01)}$

(86) Numéro de dépôt international:
**PCT/FR2012/050854**

(87) Numéro de publication internationale:
**WO 2012/175828 (27.12.2012 Gazette 2012/52)**

(54) **OPÉRATEUR DE MULTIPLICATION ET ADDITION FUSIONNÉES À PRÉCISION MIXTE**

FUSIONIERTER MULTIPLIKATIONSAKKUMULATOR FÜR OPERANDEN UNTERSCHIEDLICHER GENAUIGKEIT

MIXED PRECISION FUSED MULTIPLY ACCUMULATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2011 FR 1153649**

(43) Date de publication de la demande:
**05.03.2014 Bulletin 2014/10**

(73) Titulaire: **Kalray**
**91400 Orsay (FR)**

(72) Inventeurs:
• **DUPONT DE DINECHIN, Florent**
  **F-13100 Aix en Provence (FR)**
• **BRUNIE, Nicolas**
  **F-38000 Grenoble (FR)**
• **DUPONT DE DINECHIN, Benoît**
  **F-91400 Orsay (FR)**

(74) Mandataire: **de Jong, Jean Jacques et al**
**Omnipat**
**24, place des Martyrs de la Résistance**
**13100 Aix en Provence (FR)**

(56) Documents cités:
• **ZHAOLIN LI ET AL: "Design of A Double-Precision Floating- Point Multiply-Add-Fused Unit with Consideration of Data Dependence", IEEE COMPUTER SOCIETY ANNUAL SYMPOSIUM ON VLSI (ISVLSI '07), 1 janvier 2007 (2007-01-01), pages 492-497, XP055019793, DOI: 10.1109/ISVLSI.2007.37**
• **ERIC QUINNELL ET AL: "Floating-Point Fused Multiply-Add Architectures", CONFERENCE RECORD OF THE FORTY-FIRST ASILOMAR CONFERENCE ON SIGNALS, SYSTEMS & COMPUTERS, 2007 : NOVEMBER 4 - 7, 2007, PACIFIC GROVE, CALIFORNIA / ED. BY MICHAEL B. MATTHEWS. IN COOPERATION WITH THE NAVAL POSTGRADUATE SCHOOL, MONTEREY, CALIFORNIA, PI, 4 novembre 2007 (2007-11-04), pages 331-337, XP031242107, ISBN: 978-1-4244-2109-1**

**Description**

**Domaine technique de l'invention**

L'invention est relative à une unité à virgule flottante (FPU) d'un processeur, et plus particulièrement à un opérateur de multiplication et addition fusionnées, plus couramment désigné par FMA (du terme anglais « Fused Multiply-Add »).

**État de la technique**

Un opérateur FMA prend trois opérandes binaires signés à virgule flottante de même format de précision, deux opérandes de multiplication A et B, et un opérande d'addition C. Il calcule le terme AB+C pour produire un résultat R dans le même format de précision que les opérandes. La particularité d'un tel opérateur est qu'il effectue un seul arrondi à la fin du calcul, ce qui augmente sa précision du fait que tous les bits sont conservés dans les calculs intermédiaires. Cet opérateur est particulièrement utile lorsque le produit AB et l'opérande C sont de signes opposés mais très proches en valeur absolue, produisant un résultat dans lequel des bits significatifs sortent du champ de précision de la sortie du circuit, mais qui peuvent être récupérés, en réajustant l'exposant, à partir des résultats de calcul intermédiaire.

Les opérandes A, B et C sont dans un format à virgule flottante selon la norme IEEE-754, comprenant un bit de signe s, un exposant E, et une mantisse m. Cette norme définit plusieurs précisions, notamment « binary32 » avec un bit de signe, un exposant de 8 bits et une mantisse de 23+1 bits (dont un bit implicite codé dans l'exposant), « binary64 » avec un exposant de 11 bits et une mantisse de 52+1 bits, et « binary128 » avec un exposant de 15 bits et une mantisse de 112+1 bits.

Quand cela est possible, un nombre à virgule flottante est représenté sous forme « normale », à savoir un bit de signe, un bit à 1 devant la virgule, p-1 bits derrière la virgule (où p est la taille de la mantisse), et un exposant indicatif de la position de la virgule par rapport à l'unité. Le bit à 1 devant la virgule est implicite et n'est donc pas véhiculé. Il en résulte qu'avec p-1 bits on définit une mantisse de p bits pour un nombre normal, le p-ième bit étant le bit implicite.

L'exposant E est codé par un nombre positif (de 0 à 255 pour le format binary32). Pour les nombres normaux, l'exposant réel e est obtenu en soustrayant un biais (« bias » en anglais) b : e = E - b. Ce biais est défini par la norme, par exemple b = 127 pour le format binary32.

Les nombres normaux sont identifiés par E > 0. Ainsi le plus petit nombre normal représentable dans le format binary32 est $1,00...0 \cdot 2^{-126}$.

Lorsque E = 0, le nombre est dit « sous-normal ». L'exposant réel vaut alors e = 1 - b (c'est la valeur du plus petit exposant normal) mais le bit implicite de la mantisse vaut 0 et non plus 1. Par exemple dans le format binary32 les nombres sous-normaux sont de la forme $\pm 0,XX...X \cdot 2^{-126}$. Ceci permet également de représenter la valeur 0.

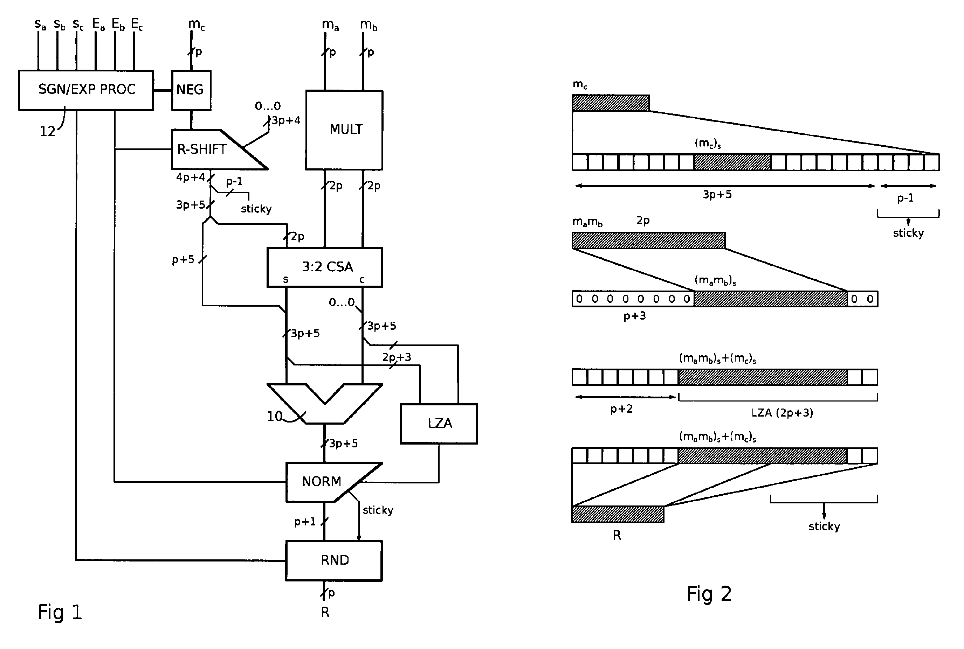

La figure 1 représente schématiquement un opérateur FMA classique, tel que décrit dans l'ouvrage ["Handbook of Floating Point Arithmetic", Jean Michel Muller et al., Chaps. 8.5, 9.5]. Les mantisses $m_a$ et $m_b$ des opérandes A et B, de p bits (y compris le bit devant la virgule), sont fournis à un arbre de multiplication MULT. Cet arbre produit deux sorties de 2p bits sur deux entrées d'un additionneur à sauvegarde de retenue CSA (« Carry-Save Adder »). Une troisième entrée de l'additionneur CSA reçoit 2p bits d'un circuit de décalage à droite R-SHIFT. L'additionneur CSA produit un résultat sous la forme d'une somme partielle s et une séquence de retenues c, sur 2p et 2p+1 bits, respectivement. Les sorties s et c de l'additionneur sont complétées à gauche, respectivement, par les p+5 bits de poids fort de la sortie du circuit de décalage R-SHIFT, et p+4 bits nuls, formant ainsi deux nombres de 3p+5 bits appliqués aux deux entrées d'un additionneur complet 10.

Le circuit de décalage R-SHIFT reçoit comme bits de poids fort la mantisse $m_c$ de l'opérande d'addition, complétée à droite par 3p+4 bits nuls. La taille du circuit de décalage est donc de 4p+4 bits. Les p-1 bits de poids faible ne sont jamais utilisables comme des bits significatifs - un OU logique sur tous ces bits forme un bit traditionnellement appelé « sticky » qui condense l'information utile de ces bits : sont-ils tous nuls, ou pas ? Les 3p+5 bits restants peuvent tous servir au calcul : les 2p bits de poids faible sont fournis à l'additionneur CSA, et les p+5 bits de poids fort restants à l'additionneur 10.

Les signes s et exposants E des opérandes sont fournis à un circuit de traitement 12 qui produit la consigne de décalage du circuit R-SHIFT, égale ici à $e_a + e_b - e_c + p + 4$. En fonction des informations de signe, le circuit 12 rend la mantisse $m_c$ négative par un circuit NEG placé en amont du circuit de décalage R-SHIFT.

La sortie de l'additionneur 10, également sur 3p+5 bits, est fournie à un circuit de normalisation NORM. Une normalisation consiste essentiellement à effectuer un décalage à gauche du résultat, pour amener le premier bit de poids fort à 1 en tête du nombre (comme exigé par la norme), et à réajuster l'exposant en conséquence. L'exposant et le décalage à gauche sont déterminés par les termes $e_a + e_b$ ou $e_c$ transmis par le circuit 12, et dépendent de la position d'alignement de la mantisse $m_c$ par rapport au produit $m_a m_b$. Il faut ajouter à cela une information fournie par un circuit d'anticipation de zéros en tête LZA. Le circuit LZA estime, à partir des 2p+3 bits de poids faible de chacune des entrées de l'additionneur 10, le nombre de zéros en tête de la sortie de l'additionneur. Ce nombre de zéros correspond à un décalage à gauche supplémentaire à faire, et à une compensation à apporter à l'exposant.

L'estimation faite par le circuit LZA est précise à 1 près, selon que l'addition propage une retenue ou non sur le bit de poids le plus fort. Pour supprimer cette incertitude, on procède à une normalisation supplémentaire, mais celle-ci est très rapide, car effectuée sur un bit seulement. On procède ainsi, car l'estimation du nombre de zéros dans la configuration représentée se fait en parallèle du calcul de l'additionneur 10, et n'introduit donc pas de latence supplémentaire dans la production du résultat final.

Le circuit NORM fournit un résultat sur p+1 bits à un circuit d'arrondi RND qui produit le résultat final R arrondi sur p bits. Les bits non nuls restant derrière les p+1 bits sont condensés avec le bit « sticky » provenant du circuit de décalage R-SHIFT. Ce bit « sticky » participe au calcul de l'arrondi avec le bit de poids faible de la sortie du circuit de normalisation.

Au niveau du circuit RND on détermine également si le signe du résultat doit être inversé, en fonction d'informations produites par le circuit de traitement 12 et par le signe du résultat de l'additionneur (dans le cas où le signe n'est pas prévisible a priori par exemple en faisant AB + C où AB est positif et C négatif). Dans la configuration représentée, si on calcule par exemple AB-C (où A, B et C sont tous positifs), le circuit NEG inverse le signe de la mantisse $m_c$, et le signe du résultat n'est pas changé. Si on calcule au contraire C-AB, la mantisse $m_c$ est de nouveau inversée, mais on inverse également le signe du résultat R (c'est-à-dire qu'on calcule -(AB-C)).

La figure 2 illustre le fonctionnement du circuit de la figure 1 à divers stades du parcours des nombres traités. En grisé, on représente le cas où AB et C sont proches ($e_a+e_b-e_c = 0$). Les dimensions correspondent à p=5. Cette figure a été adaptée du manuel cité plus haut.

A la partie supérieure, la mantisse $m_c$ est introduite dans le circuit de décalage R-SHIFT. Sa version décalée $(m_c)_s$ est positionnée dynamiquement dans une plage de 4p+4 bits en fonction des exposants. On a représenté en grisé la position correspondant à $e_a+e_b-e_c=0$. Le bit de poids fort de la mantisse décalée $(m_c)_s$ est aligné sur le bit de poids fort du produit décalé $(m_am_b)_s$. Le produit $(m_am_b)_s$ est en fait décalé statiquement, par le câblage de l'entrée correspondante de l'additionneur 10, de sorte que la mantisse $(m_c)_s$ puisse, par le circuit R-SHIFT, être décalée, sur l'autre entrée de l'additionneur 10, entre une position complètement à gauche du produit $(m_am_b)_s$ et une position complètement à droite. On prévoit un nombre de bits supplémentaires dans la plage de décalage, ici 4, dont trois à gauche et un à droite du produit, pour tenir compte notamment de propagations de retenue, de bits servant à l'arrondi, et d'incertitudes quant à la position de la virgule (par exemple, le produit des mantisses de deux nombres normaux comporte deux bits devant la virgule, dont le plus significatif peut être nul).

A la cinquième rangée on a représenté la sortie de l'additionneur 10. La somme $(m_am_b)_s+(m_c)_s$, représentée en grisé, du fait qu'elle peut produire une retenue sortante, occupe un bit de plus à gauche. L'anticipation des zéros en tête (LZA) s'effectue sur l'ensemble des bits potentiels de la somme jusqu'au bit le plus à droite de l'entrée de l'additionneur 10.

La partie inférieure correspond à l'opération de normalisation. La sortie R, avant arrondi est prise sur les p+1 bits de poids fort de la somme $(m_am_b)_s+(m_c)_s$.

Les opérateurs FMA prennent des opérandes de même format. Si on a besoin d'une précision importante du résultat, on utilisera des opérateurs FMA prenant des opérandes au format binary64, voire binary128, plutôt que binary32.

Dans de nombreuses applications, on souhaite disposer pour les calculs d'une précision intermédiaire supérieure à la précision des entrées. Ceci permet de minimiser les problèmes liés à l'accumulation des erreurs d'arrondi. Il est par exemple courant de devoir calculer une somme de nombreux produits, ce qui est réalisé par des itérations de multiplication-accumulation. Dans ce cas il est souhaitable de calculer l'accumulation dans un format plus précis que celui des entrées. Par exemple, pour des entrées binary32, on calculera l'accumulation en binary64.

Ainsi, dans une telle application, on prévoit un opérateur FMA conçu pour des opérandes à la précision maximale souhaitée, au format binary64, voire binary128. Les opérandes de multiplication de format binary32 sont alors convertis au format binary64 avant d'être appliqués sur l'opérateur. Il existe des instructions de programme permettant cette conversion au niveau logiciel. La conversion n'est pas triviale : il faut mapper une mantisse de 24 bits sur une mantisse de 53 bits, mapper un exposant de 8 bits sur un exposant de 11 bits utilisant un biais différent, et convertir les nombres sous-normaux du format binary32 en nombres normaux du format binary64, puisque tous les nombres sous-normaux du format binary32 sont représentables comme des nombres normaux dans le format binary64.

Il en résulte que l'opérateur FMA est sous-exploité pour les opérandes de multiplication, et que l'on complexifie son utilisation par le besoin de conversion de format.

**Résumé de l'invention**

On souhaite donc prévoir un opérateur FMA acceptant des opérandes de précision mixte et dont la complexité soit inférieure à celle d'un opérateur FMA conçu pour des opérandes ayant tous la précision maximale.

On tend à satisfaire ce besoin en prévoyant un procédé de calcul fusionné de la somme d'un opérande d'addition et d'un produit de deux opérandes de multiplication, les opérandes étant des nombres binaires à virgule flottante représentés dans un format standardisé sous forme de mantisse et exposant. Les opérandes de multiplication sont dans un format de précision inférieure à celle du format de l'opérande d'addition, avec q > 2p, où p est la taille de mantisse du format des opérandes de multiplication, et q est la taille de mantisse du format de l'opérande d'addition. Le procédé comprend les étapes suivantes :

- multiplier les mantisse des opérandes de multiplication à l'aide d'un multiplieur de capacité p bits ;

- compléter le produit résultant de la multiplication, de 2p bits, par des bits de poids faible nuls afin de former une mantisse de produit de q bits ;

- aligner la mantisse de l'opérande d'addition et la mantisse du produit en fonction des exposants des opérandes ; et

- additionner la mantisse du produit et la mantisse de l'opérande d'addition alignés.

Selon un mode de mise en oeuvre, le procédé comprend les étapes suivantes :

- décaler à gauche la mantisse de l'opérande d'addition et le produi en fonction des nombres de zéros en tête des mantisses des opérandes de multiplication ; et

- diminuer l'exposant du résultat final de la valeur du décalage à gauche.

On prévoit également un circuit de calcul fusionné de la somme d'un opérande d'addition et d'un produit de deux opérandes de multiplication, les opérandes étant des nombres binaires à virgule flottante représentés dans un format standardisé sous forme de mantisse et exposant. Les opérandes de multiplication sont dans un format de précision inférieure à celle du format de l'opérande d'addition, avec q > 2p, où p est la taille de mantisse du format des opérandes de multiplication, et q est la taille de mantisse du format de l'opérande d'addition. Le circuit comprend un multiplieur de capacité p bits recevant les mantisses des opérandes de multiplication ; un circuit de décalage agencé pour aligner la mantisse de l'opérande d'addition avec la sortie du multiplieur en fonction des exposants des opérandes ; et un additionneur conçu pour traiter des mantisses de q bits, recevant la mantisse de l'opérande d'addition et le produit alignés, les lignes d'entrée de l'additionneur correspondant au produit étant complétées à droite par des lignes à 0 pour former une mantisse de q bits.

Selon un mode de réalisation, le circuit comprend un circuit de comptage de zéros fournissant la somme des nombres des zéros en tête des mantisses des opérandes de multiplication ; un circuit de décalage à gauche de la sortie du multiplieur, recevant la sortie du circuit de comptage de zéros comme consigne de décalage ; et un circuit de décalage à droite de la mantisse de l'opérande d'addition, recevant comme consigne de décalage une fonction des exposants des opérateurs, diminuée de la sortie du circuit de comptage de zéros.

Selon un mode de réalisation, la taille des entrées de l'additionneur est de 2q bits, à une constante additive de quelques unités près, servant à compenser des incertitudes liées à des propagations de retenue et de bits nécessaires pour effectuer un arrondi.

**Description sommaire des dessins**

Des modes de réalisation seront exposés dans la description suivante, faite à titre non limitatif en relation avec les figures jointes parmi lesquelles :

- la figure 1, précédemment décrite, représente une architecture d'opérateur FMA classique ;

- la figure 2, précédemment décrite, est un schéma représentant des nombres intermédiaires produits dans l'architecture de la figure 1 ;

- la figure 3 représente un premier mode de réalisation d'architecture d'opérateur FMA à précision mixte ;

- la figure 4 est un schéma représentant des nombres intermédiaires produits dans l'architecture de la figure 3 ;

- la figure 5 est un schéma représentant des nombres intermédiaires produits dans une architecture dépourvue d'une fonction de « pré-normalisation », dans le cas où les opérandes de multiplication sont sous-normaux ;

- la figure 6 est un schéma représentant des nombres intermédiaires, dans la même situation que la figure 5, mais produits dans l'architecture de la figure 3 ; et

- la figure 7 représente un deuxième mode de réalisation d'architecture d'opérateur FMA à précision mixte, opérant selon le schéma de la figure 5.

**Description d'un mode de réalisation préféré de l'invention**

Pour satisfaire les besoins de nombreuses applications de calcul à virgule flottante, par exemple du type multiplier-accumuler, on propose un opérateur FMA de précision mixte dont la complexité est réduite par rapport à un opérateur FMA classique offrant la précision requise. Le format du résultat R produit par l'opérateur et le format de l'opérande d'addition C sont de la précision maximale souhaitée, par exemple binary64, voire binary128, tandis que les opérandes de multiplication A et B sont dans un format de précision inférieure, par exemple binary32.

A un moment donné, dans la structure de l'opérateur, il convient d'effectuer une transition des nombres de format de précision inférieure au format de précision supérieure du résultat. On a choisi de faire cette transition à la sortie du multiplieur calculant le produit des mantisses des opérandes de multiplication. Le produit résultant est sous la forme d'un nombre ayant deux fois la taille des mantisses, qui s'avère être compatible à quelques bits près avec une mantisse du format de précision supérieure. Par exemple, le produit de deux mantisses du format binary32 fournit un nombre de 48 bits, que l'on peut ranger dans une mantisse de 53 bits du format binary64, en le calant à gauche et en complétant les 5 bits manquants par des zéros, sans que cela ne perturbe les calculs ayant lieu en parallèle sur les exposants.

Les exposants des opérandes de multiplication sont convertis dans le format de précision supérieure dès l'entrée de l'opérateur. Une telle conversion, portant sur des entiers, est simple. Par exemple, un exposant de format binary32 (8 bits, décalage de 127) est adapté à un exposant de format binary64 (11 bits, décalage de 1023) en rangeant les 8 bits à droite dans les 11 bits et en ajoutant 1023-127. On peut éviter cette conversion en fusionnant les biais lors du calcul du décalage de normalisation, par exemple. Pour un opérateur FMA classique, on calculerait :

$$E_c - (E_a + E_b) + (-\text{biais} + 2\text{biais}) + \text{sub} = E_c - (E_a + E_b) + \text{biais} + \text{sub},$$

où sub est un coefficient de correction qui dépend du caractère sous-normal ou non des opérandes. Cela revient finalement à sommer les exposants ou leur négation avec une constante. Dans le cas de l'opérateur FMA de précision mixte on a simplement à modifier cette constante sans corriger à proprement parler les exposants.

Bien entendu, le multiplieur est dimensionné pour traiter des mantisses du format de précision inférieure. On utilise par exemple un multiplieur 24x24 au lieu d'un multiplieur 53x53, ce qui a un impact important sur la complexité et la latence de l'opérateur FMA.

En procédant ainsi, on s'aperçoit que le produit, si on le considère dans le format de précision supérieure du résultat final, est toujours représentable sous forme d'un nombre normal, et ceci même si les deux opérandes de multiplication sont sous-normaux. Par contre, le produit peut comporter jusqu'à 2p-1 bits de poids fort nuls.

Dans un opérateur FMA classique, si les deux opérandes de multiplication sont sous-normaux, le produit est trop proche de zéro pour être représentable dans le format du résultat final. On peut donc condenser ce produit dans un bit « sticky », sachant que le résultat de l'opérateur FMA sera l'opérande d'addition, ou l'un des deux nombres qui l'encadrent si le bit « sticky » est non nul et qu'un arrondi dirigé est opéré. Ainsi, le produit ne participe effectivement à l'addition que lorsqu'un seul des opérandes de multiplication est sous-normal. Cela correspond au seul cas où le produit présente jusqu'à p-1 bits de poids fort à zéro (dans la représentation de la figure 1). On sait alors que la mantisse décalée de l'opérande d'addition ne peut pas être placée plus à droite du produit. Cela permet de faire des simplifications dans l'opérateur FMA classique, notamment de réduire le nombre de bits à considérer à droite du produit, donc la taille des entrées de l'additionneur 10.

Ces simplifications ne sont pas adaptables à un opérateur FMA de précision mixte du type envisagé ici, car un produit ayant des bits nuls à gauche reste normalisable, signifiant que la version décalée de la mantisse $m_c$ peut être située à droite du produit et présenter des bits comptabilisables dans le résultat final. On prévoit cependant une solution permettant de bénéficier de simplifications comparables.

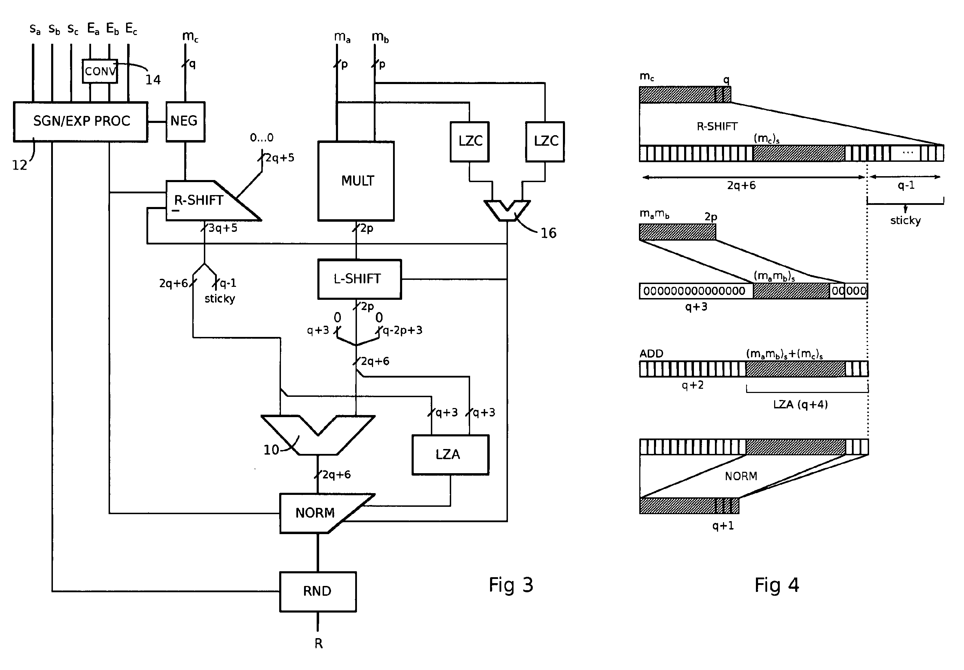

La figure 3 représente un premier mode de réalisation d'une architecture d'opérateur FMA de précision mixte. On y retrouve des éléments comparables à ceux de la figure 1, désignés par des mêmes références ou acronymes, et dont les fonctions ne seront pas décrites de nouveau - on décrira plutôt les différences par rapport à l'architecture de la figure 1.

Les mantisses $m_a$, $m_b$, des opérateurs de multiplication ont une taille de p bits, tandis que la mantisse $m_c$ de l'opérateur d'addition a une taille de q bits. En utilisant les formats binary32 et binary64, on a p=24 et q=53. De façon générale, on aura q > 2p.

Les exposants $E_a$ et $E_b$ des opérandes de multiplication sont convertis dans le format de précision supérieure par un circuit 14 dont la fonction, précédemment mentionnée, est de prendre en compte le biais.

Le multiplieur MULT, de pxp bits, recevant les mantisses $m_a$ et $m_b$, est représenté comme produisant une sortie unique de 2p bits.

Le circuit de décalage R-SHIFT a une taille de 3q+5 bits, qui est plus petite que la taille de 4q+4 bits du circuit de décalage d'un opérateur FMA classique de format binary64. Les 2q+6 bits de poids fort du circuit de décalage sont fournis à une première entrée de l'additionneur 10. Les q-1 bits de poids faible sont condensés dans un bit « sticky ». On comprendra ultérieurement comment déterminer ces nombres de bits.

La sortie du multiplieur est fournie à un circuit de décalage à gauche L-SHIFT de taille 2p. Les 2p bits de la sortie du circuit L-SHIFT sont complétés à droite par q-2p+3 zéros et à gauche par q+3 zéros, pour former un nombre de 2q+6 bits fourni à la deuxième entrée de l'additionneur 10. Parmi les zéros mis à droite, les q-2p zéros correspondent à ceux requis pour transformer le résultat du produit en une mantisse conforme au format de précision supérieure (q-2p=5 dans l'exemple des formats binary32 et binary64). L'additionneur 10 est donc dimensionné pour sommer des nombres de 2q+6 bits alors que l'additionneur homologue d'un opérateur FMA classique de format binary64 serait dimensionné pour 3q+5 bits. Cette économie de nombre de bits de l'additionneur réduit notablement sa latence.

Le circuit d'anticipation de zéros en tête LZA, servant au circuit de normalisation NORM, analyse les q+3 bits de poids faible de chacune des entrées de l'additionneur 10.

Ce qui permet de réduire le nombre de bits de l'additionneur 10 est la présence d'un circuit de pré-normalisation de la sortie du multiplieur MULT, dont fait partie le circuit de décalage L-SHIFT. Ce circuit de pré-normalisation comprend en outre deux compteurs de zéros en tête LZC analysant respectivement les mantisses $m_a$ et $m_b$ des opérandes de multiplication. Les sorties des compteurs LZC sont sommées en 16 pour fournir la consigne de décalage à gauche au circuit L-SHIFT. Cette même consigne est soustraite à la consigne de décalage à droite du circuit R-SHIFT, afin de préserver les alignements sur les deux entrées de l'additionneur 10. La consigne de décalage à gauche est finalement fournie au circuit de normalisation NORM pour la soustraire à l'exposant du résultat final.

La fonction du circuit de pré-normalisation est de normaliser le résultat de la multiplication lorsqu'au moins un des opérandes de multiplication (dans le format de précision inférieure) est sous-normal. Cette fonction est utilisable ici, car on sait que le produit est toujours représentable sous forme normale dans le format du résultat, même si les deux opérandes sont sous-normaux.

La figure 4 illustre, dans le même format que la figure 2, le fonctionnement du circuit de la figure 3 à divers stades du parcours des nombres traités. Les dimensions correspondent à p=5 et q=12. On a représenté en grisé un exemple de positions occupées par les résultats intermédiaires, dans le cas où $e_a+e_b-e_c=0$, et où on n'opère pas de décalage à gauche (les opérandes de multiplication sont normaux). Ce schéma se lit comme celui de la figure 2. On remarquera simplement que le produit décalé $(m_a m_b)_s$, de 2p (10) bits est complété à droite par q-2p (2) bits à zéro pour former une mantisse de q bits, utilisée pour l'addition effectuée à l'étape suivante.

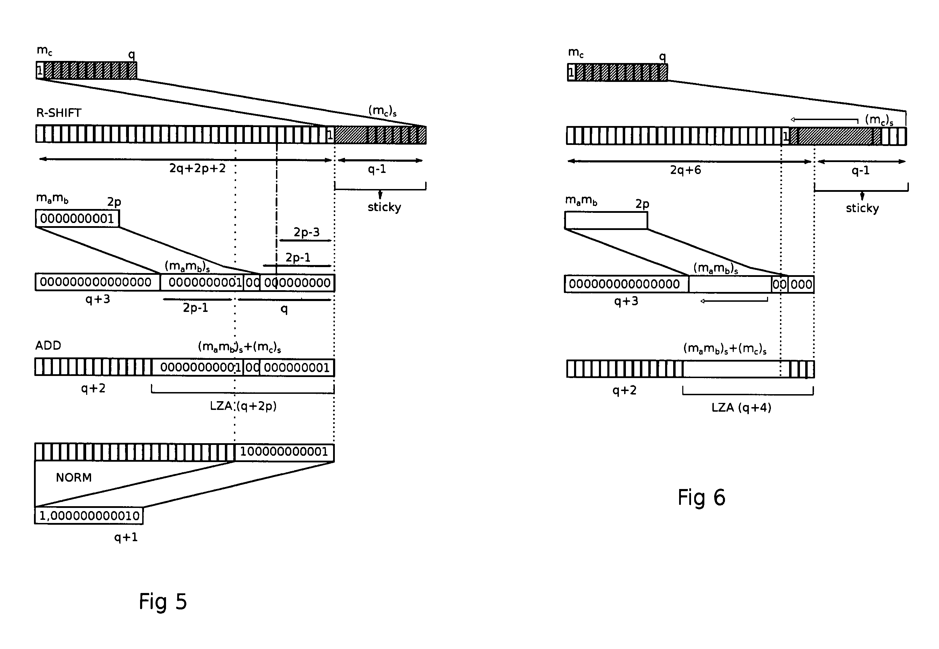

La figure 5 illustre, dans la même représentation que la figure 4, un cas extrême montrant la taille des entrées de l'additionneur 10 qu'il faudrait prévoir si on n'utilise pas de circuit de pré-normalisation.

On suppose que l'opérande d'addition est normal, c'est-à-dire que le bit de poids le plus fort de la mantisse $m_c$ est à 1. Les opérandes de multiplication sont les plus petits nombres sous-normaux de leur format, c'est-à-dire que seul leur bit de poids le plus faible est à 1. En outre, les exposants sont tels que le bit de poids fort de la mantisse décalée $(m_c)_s$ se trouve q-1 bits à droite du produit décalé $(m_a m_b)_s$. En d'autres termes, la somme produit un nombre de q bits dont le bit de poids fort, à 1, est à la position du bit de poids faible du produit décalé $(m_a m_b)_s$, et dont le bit de poids faible, à 1, est à la position du bit de poids fort de la mantisse décalée $(m_c)_s$.

Cette situation n'arrive pas dans un opérateur FMA classique. Pour la capturer, une première solution est de prévoir 2p-3 lignes supplémentaires à droite des bus de 2q+5 lignes alimentant les entrées de l'additionneur 10 de la figure 3. Ces 2p-3 lignes sont alimentées par le circuit de décalage R-SHIFT au niveau de la première entrée de l'additionneur, et forcées à 0 au niveau de la deuxième entrée. Cela porte la taille de l'additionneur à 2q+2p+2 bits, taille comparable à celle, 3q+5, de son homologue dans opérateur FMA binary64 classique.

L'anticipation de zéros en tête (LZA) se fait sur q+2p bits.

Une meilleure solution est d'utiliser le circuit de pré-normalisation prévu dans la figure 3, permettant d'économiser les 2p-3 lignes susmentionnées.

La figure 6 illustre le fonctionnement du circuit de pré-normalisation dans la même situation que la figure 5. Les dimensions indiquées sont celles qui ont été mentionnées en relation avec la figure 3. Le décalage à gauche calculé dans cette situation est de 2p-2 bits, provenant de p-1 (4) zéros en tête dans chacune des mantisses $m_a$ et $m_b$. On voit qu'avec ce décalage, représenté par des flèches « 2p-2 », le bit de poids fort de la mantisse $(m_c)_s$ est ramené sur l'une des lignes alimentant l'additionneur, alors que, sans décalage, il aurait contribué au bit « sticky ». Le bit à 1 de poids faible du produit $(m_a m_b)_s$, décalé de la même quantité, conserve son alignement avec la mantisse $(m_c)_s$.

On remarquera que le décalage à gauche n'a pas besoin d'être précis à quelques unités près. Le décalage à gauche aurait pu être d'un bit de plus, ramenant le 1 du produit $(m_a m_b)_s$ dans la position la plus à gauche, ou bien d'un bit de moins, ramenant toujours le bit de poids fort de la mantisse $(m_c)_s$ sur une ligne d'entrée de l'additionneur.

L'anticipation de zéros en tête (LZA) se fait sur q+4 bits.

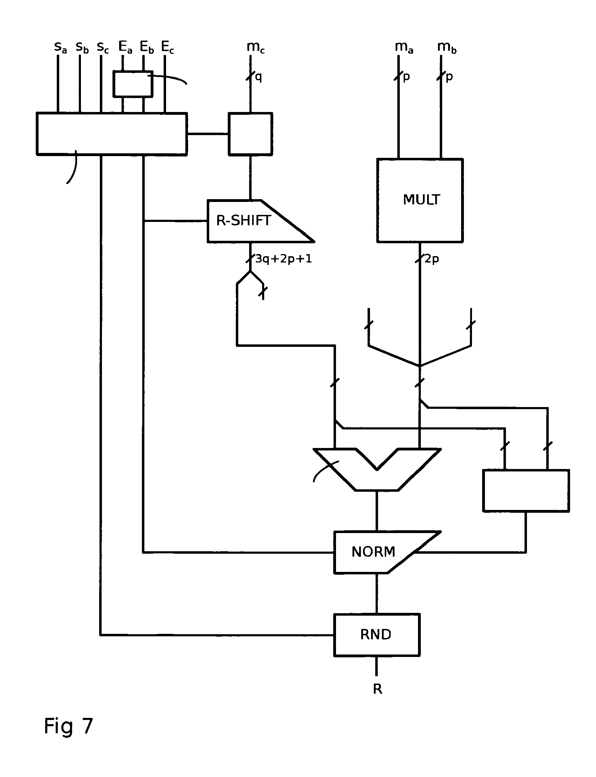

La figure 7 représente un mode de réalisation d'architecture d'opérateur FMA à précision mixte conforme à la structure et au fonctionnement décrits en relation avec la figure 5, c'est-à-dire sans circuit de pré-normalisation. Ses éléments constitutifs ont été décrits en relation avec les figures précédentes, et ne seront pas décrits de nouveau.

Comme évoqué précédemment, ce mode de réalisation requiert un additionneur de taille comparable à celui d'un opérateur FMA classique fournissant un résultat de même précision. Il présente néanmoins l'avantage, tout comme le mode de réalisation de la figure 3, d'utiliser un multiplieur de précision inférieure, nettement plus rapide et occupant moins de surface.

Par rapport au mode de réalisation de la figure 3, celui-ci n'introduit pas de latence à la sortie du multiplieur, latence imputable au circuit de décalage à gauche L-SHIFT. Néanmoins, cet avantage peut être amoindri par le fait qu'il utilise un additionneur plus grand, et donc plus lent, que le mode de réalisation de la figure 3.

Un avantage non négligeable des opérateurs FMA à précision mixte du type décrit ici est que leurs opérandes peuvent être fournis par un bus de données de taille notablement inférieure à la taille du bus requis par un opérateur FMA classique fournissant un résultat de même précision. Par exemple, un opérateur mixte binary32/binary64 requiert 128 bits de données (2x32+64), alors qu'un opérateur FMA classique binary64 requiert 192 bits. La diminution de la taille du bus est accompagnée d'une diminution de consommation électrique.

De nombreuses variantes et modifications des modes de réalisation décrits ici apparaîtront à l'homme du métier. Les structures décrites opèrent un alignement dit « ancré sur le produit », c'est-à-dire que le produit a un décalage fixe alors que l'opérande d'addition est décalé de manière dynamique autour du produit. Il existe des structures où l'alignement est ancré sur l'opérande d'addition. Les principes décrits ici s'appliquent également à ces dernières.

**Revendications**

1. Procédé de calcul fusionné de la somme d'un opérande d'addition (c) et d'un produit de deux opérandes de multiplication (a, b), les opérandes étant des nombres binaires à virgule flottante représentés dans un format standardisé sous forme de mantisse et exposant, **caractérisé en ce que** les opérandes de multiplication sont dans un format de précision inférieure à celle du format de l'opérande d'addition, avec q > 2p, où p est la taille de mantisse du format des opérandes de multiplication, et q est la taille de mantisse du format de l'opérande d'addition, le procédé comprenant les étapes suivantes :

   • multiplier les mantisses $(m_a, m_b)$ des opérandes de multiplication à l'aide d'un multiplieur de capacité p bits ;
   • compléter le produit $(m_a m_b)$ résultant de la multiplication, de 2p bits, par des bits de poids faible nuls afin de former une mantisse de produit de q bits ;
   • aligner la mantisse $(m_c)$ de l'opérande d'addition et la mantisse du produit en fonction des exposants des opérandes ; et
   • additionner la mantisse du produit et la mantisse de l'opérande d'addition alignés.

2. Procédé selon la revendication 1, comprenant les étapes suivantes :

   • décaler à gauche la mantisse $(m_c)$ de l'opérande d'addition et le produit $(m_a m_b)$ en fonction des nombres de zéros en tête des mantisses des opérandes de multiplication ; et
   • diminuer l'exposant du résultat final de la valeur du décalage à gauche.

3. Circuit de calcul fusionné de la somme d'un opérande d'addition (c) et d'un produit de deux opérandes de multiplication (a, b), les opérandes étant des nombres binaires à virgule flottante représentés dans un format standardisé sous forme de mantisse et exposant, **caractérisé en ce que** les opérandes de multiplication sont dans un format de précision inférieure à celle du format de l'opérande d'addition, avec q > 2p, où p est la taille de mantisse du format des opérandes de multiplication, et q est la taille de mantisse du format de l'opérande d'addition, comprenant :

   • un multiplieur (MULT) de capacité p bits recevant les mantisses $(m_a, m_b)$ des opérandes de multiplication ;
   • un circuit de décalage (R-SHIFT) agencé pour aligner la mantisse $(m_c)$ de l'opérande d'addition avec la sortie du multiplieur en fonction des exposants des opérandes ; et
   • un additionneur (10) conçu pour traiter des mantisses de q bits, recevant la mantisse de l'opérande d'addition et le produit alignés, les lignes d'entrée de l'additionneur correspondant au produit étant complétées à droite par des lignes à 0 pour former une mantisse de q bits.

4. Circuit selon la revendication 3, comprenant :

• un circuit de comptage de zéros (LZC, 16) fournissant la somme des nombres des zéros en tête des mantisses des opérandes de multiplication ;
• un circuit de décalage à gauche (L-SHIFT) de la sortie du multiplieur, recevant la sortie du circuit de comptage de zéros comme consigne de décalage ; et
• un circuit de décalage à droite (R-SHIFT) de la mantisse de l'opérande d'addition, recevant comme consigne de décalage une fonction des exposants des opérateurs, diminuée de la sortie du circuit de comptage de zéros.

5. Circuit selon la revendication 4, dans lequel la taille des entrées de l'additionneur est de 2q bits, à une constante additive de quelques unités près, servant à compenser des incertitudes liées à des propagations de retenue et de bits nécessaires pour effectuer un arrondi.

**Patentansprüche**

1. Verfahren zur fusionierten Berechnung der Summe eines Additionsoperanden (c) und eines Produkts von zwei Multiplikationsoperanden (a, b), wobei die Operanden in einem Standardformat in Form von Mantisse und Exponent dargestellte binäre Gleitkommazahlen sind, **dadurch gekennzeichnet, dass** die Multiplikationsoperanden in einem Präzisionsformat, das kleiner als das Format des Additionsoperanden ist, sind, mit q > 2p, wobei p die Größe der Mantisse des Formats der Multiplikationsoperanden, und q die Größe der Mantisse des Formats des Additionsoperanden ist, wobei das Verfahren die folgenden Schritte umfasst:

• die Mantissen ($m_a$, $m_b$) der Multiplikationsoperanden mit Hilfe eines p-Bit-Kapazitäts-Multiplikators multiplizieren;
• das aus der Multiplikation entstehende Produkt ($m_a m_b$), von 2p Bits, durch niederwertige Null-Bits vervollständigen, um eine q-Bit-Produkt-Mantisse zu bilden;
• die Mantisse ($m_c$) des Additionsoperanden und die Mantisse des Produkts in Abhängigkeit von den Exponenten der Operanden ausrichten; und
• die Mantisse des Produkts und die Mantisse des Additionsoperanden, die ausgerichtet sind, addieren.

2. Verfahren nach Anspruch 1, das die folgenden Schritte umfasst:

• die Mantisse ($m_c$) des Additionsoperanden und das Produkt ($m_a m_b$) in Abhängigkeit von den Anzahlen von Nullen zu Beginn der Mantissen der Multiplikationsoperanden nach links verschieben; und
• den Exponenten des Endergebnisses um den Wert der Links-Verschiebung mindern.

3. Schaltung zur fusionierten Berechnung der Summe eines Additionsoperanden (c) und eines Produkts von zwei Multiplikationsoperanden (a, b), wobei die Operanden in einem Standardformat in Form von Mantisse und Exponent dargestellte binäre Gleitkommazahlen sind, **dadurch gekennzeichnet, dass** die Multiplikationsoperanden in einem Präzisionsformat, das kleiner als das Format des Additionsoperanden ist, sind, mit q > 2p, wobei p die Größe der Mantisse des Formats der Multiplikationsoperanden, und q die Größe der Mantisse des Formats des Additionsoperanden ist, umfassend:

• einen p-Bit-Kapazitäts-Multiplikator (MULT), der die Mantissen ($m_a$, $m_b$) der Multiplikationsoperanden empfängt;
• eine Verschiebungsschaltung (R-SHIFT), die angeordnet ist, um die Mantisse ($m_c$) des Additionsoperanden mit dem Ausgang des Multiplikators in Abhängigkeit von den Exponenten der Operanden auszurichten; und
• einen Addierer (10), der ausgestaltet ist, um q-Bit-Mantissen zu verarbeiten, der die Mantisse des Additionsoperanden und das Produkt, die ausgerichtet sind, empfängt, wobei die Eingangslinien des dem Produkt entsprechenden Addierers rechts mit Null-Linien vervollständigt sind, um eine q-Bit-Mantisse zu bilden.

4. Schaltung nach Anspruch 3, umfassend:

• eine Null-Zähl-Schaltung (LZC, 16), die die Summe der Anzahlen von Nullen zu Beginn der Mantissen der Multiplikationsoperanden liefert;

• eine Links-Verschiebungsschaltung (L-SHIFT) zur Verschiebung nach links des Multiplikator-Ausgangs, die den Ausgang der Null-Zähl-Schaltung als Verschiebungssollwert empfängt; und
• eine Rechts-Verschiebungsschaltung (R-SHIFT) zur Verschiebung nach rechts der Mantisse des Additionsoperanden, die als Verschiebungssollwert eine Funktion der Exponenten der Operatoren, gemindert um den Ausgang der Null-Zähl-Schaltung, empfängt.

**5.** Schaltung nach Anspruch 4, bei der die Größe der Eingänge des Addierers 2q Bits ist, auf eine additive Konstante einiger Einheiten genau, um Ungewissheiten in Verbindung mit Ausbreitungen von Übertrag und Bits, die zum Auf- und Abrunden notwendig sind, auszugleichen.

**Claims**

**1.** A method of fused calculation of the sum of an addend (c) and a product of two multiplicands (a, b), the addend and multiplicands being binary floating-point numbers represented in a standardized format as a mantissa and an exponent, wherein the multiplicands are in a lower precision format than the addend, with q > 2p, where p is the mantissa size of the multiplicand precision format and q is the mantissa size of the addend precision format, the method comprising the steps of:

• multiplying the mantissas ($m_a$, $m_b$) of the multiplicands using a p-bit multiplier;
• right-padding the 2p-bit product ($m_a m_b$) resulting from the multiplication with zeros to form a q-bit product mantissa;
• aligning the mantissa ($m_c$) of the addend and the mantissa of the product based on the exponent values of the addend and multiplicands; and
• adding the aligned mantissas of the product and the addend.

**2.** The method of claim 1, comprising the steps of:

• left-shifting the addend mantissa ($m_c$) and the product ($m_a m_b$) based on the number of leading zeros in the multiplicand mantissas; and
• decreasing the exponent of the final result by the left-shift amount.

**3.** A circuit for calculating the fused sum of an addend (c) and a product of two multiplicands (a, b), the addend and multiplicands being binary floating-point numbers represented in a standardized format as a mantissa and an exponent, wherein the multiplicands are in a lower precision format than the addend, with q > 2p, where p is the mantissa size of the multiplicand precision format and q is the mantissa size of the addend precision format, comprising:

• a p-bit multiplier (MULT) receiving the mantissas ($m_a$, $m_b$) of the multiplicands;
• a shift circuit (R-SHIFT) configured to align the mantissa ($m_c$) of the addend with the product output by the multiplier based on the exponent values of the addend and multiplicands; and
• an adder (10) configured for processing q-bit mantissas, receiving the aligned mantissa of the addend and the product, the input lines of the adder corresponding to the product being completed to the right by lines at 0 to form a q-bit mantissa.

**4.** The circuit according to claim 3, comprising:

• a zero counter circuit (LZC, 16) providing the sum of the number of leading zeros of the mantissas of the multiplicands;
• a left-shift circuit (L-SHIFT) connected to act on the output of the multiplier, receiving the output of the zero counter circuit as the shift amount; and
• a right-shift circuit (R-SHIFT) connected to act on the mantissa of the addend, receiving as a shift amount a function of the exponents of the addend and multiplicands, less the output of the zero counter circuit.

**5.** The circuit according to claim 4, wherein the size of the inputs of the adder is 2q bits, plus a few bits for accommodating carry propagation and rounding bits.

Fig 2

Fig 1

Fig 3

Fig 4

EP 2 702 478 B1

Fig 5

Fig 6

EP 2 702 478 B1

Fig 7